# EUROPEAN PATENT APPLICATION

(11) **EP 3 127 433 A1**
(43) Date of publication of application: **08.02.2017**
(21) Application number: 15191090.8
(22) Date of filing: 22.10.2015
(51) Int. Cl.: A23L 3/375, A23L 3/36, F25D 3/11, B01F 5/04, B01F 3/04

(54) **APPARATUS AND METHOD FOR PROVIDING LIQUID-GAS ENTRAINED CRYOGEN MIXTURE**

(30) Priority: 03.08.2015 US 201514816096
(71) Applicant: Linde Aktiengesellschaft, 80331 München (DE)
(72) Inventor: NEWMAN, Michael D., Hillsborough, NJ New Jersey 08844 (US)
(74) Representative: Hofmann, Andreas

(57) **Abstract**

In order to overcome the limitations and problems that earlier apparatus and methods have experienced, an apparatus (10) for providing a liquid-gas entrained cryogen mixture onto a product (16), in particular onto a food product, is proposed, said apparatus (10) comprising:
- a first pipe (26) through which is provided a flow (52) of liquid cryogen (30);
- a second pipe (60) through which is provided a flow (72) of gaseous cryogen (64), the second pipe (60) in fluid communication with the first pipe (26) at a mixing region (70); and
a pulsing valve (78) disposed at an interior of the second pipe (60) upstream of the mixing region (70), the pulsing valve (78) adapted for releasing the gaseous cryogen (64) into the liquid cryogen (30) at select intervals of time to provide a pulsating flow (80) of the liquid-gas entrained cryogen mixture downstream of the mixing region (70) for contacting the product (16).

## Description

### Technical field of the present invention

The present invention relates to freezer tunnel apparatus for cryogenically chilling products, in particular to food freezer tunnel apparatus for cryogenically chilling food products, and related processes therefore.

### Technological background of the present invention

Food freezing tunnels, such as for example those that use cryogenic substances to chill and/or freeze food products, are limited in their capacity by the overall heat transfer co-efficient that can be used on the products. For example, many food freezing tunnels rely upon increasing heat transfer effect by correspondingly increasing air flow velocity across the product for which the heat transfer is to be applied.

There are, unfortunately, practical and economic limitations in many of these apparatus and methods and therefore, the increased heat transfer effect is not fully realized, especially with and during large scale industrial operations.

The food processing industry would benefit from increased heat transfer effect with food freezing applications, because greater heat transfer effect results in being able to use smaller apparatus or conversely, using apparatus which can increase the production or flow through rate of products to be chilled or frozen.

Some improvements are known and have found their way into food freezing tunnels. For example, spray nozzles are now used to increase the overall heat transfer effecting during the freezing process by spraying liquid nitrogen (LIN) through the nozzles directly onto the surface of the food product to contact same with droplets of that cryogenic substance.

These small nitrogen droplets evaporate quickly upon contact with the warm food product, thereby removing or transferring heat immediately from the surface of the food product to chill and further freeze same.

Other apparatus and systems use high pressure LIN to provide heat transfer at the surface of the food product. However, these known apparatus and processes are expensive, can result in an unusually large amount of the nitrogen product being lost to waste or alternatively, require additional equipment to recycle unused nitrogen.

In both instances, increased costs and a larger footprint of the food freezing tunnel are necessary, thereby making the known type of apparatus and processes less efficient and less cost-effective.

### Disclosure of the present invention: object, solution, advantages

Starting from the disadvantages and shortcomings as described above as well as taking the prior art as discussed into account, an object of the present invention is to overcome the limitations and problems that earlier apparatus and methods have experienced.

This object is accomplished by an apparatus comprising the features of claim 1 as well as by a method comprising the features of claim 11. Advantageous embodiments and expedient improvements of the present invention are disclosed in the respective dependent claims.

The present invention basically provides for a pulsed liquid-gas entrained cryogen flow generator and for a corresponding method; in particular, there is provided herein a pulsed heat transfer effect apparatus and method for products, such as for example food products, wherein a high pressure nitrogen gas is pulsed into a liquid nitrogen flow stream, which stream thereafter is sprayed from nozzles thereby increasing turbulence on a surface of the product to facilitate and promote increased heat transfer effect at the product.

The combination of the nitrogen gas, liquid nitrogen, and pulsing of same, results in extremely small nitrogen droplets which evaporate more quickly and therefore result in a higher evaporative surface cooling (heat transfer effect) at the surface of the product.

In addition, the pulsed spray results in increasing turbulence of the cryogenic substance on the surface of the product which accordingly promotes increased heat transfer, i. e. heat removal from the product. Carbon dioxide may be used instead of nitrogen.

There is therefore provided an apparatus embodiment for providing a liquid-gas entrained cryogen mixture onto a product, in particular on a food product, which includes a first pipe through which is provided a flow of liquid cryogen; a second pipe through which is provided a flow of gaseous cryogen, the second pipe in fluid communication with the first pipe at a mixing region; and a pulsing valve disposed at an interior of the second pipe upstream of the mixing region, the pulsing valve adapted for releasing the gaseous cryogen into the liquid cryogen at select intervals of time to provide a pulsating flow of the liquid-gas entrained cryogen mixture downstream of the mixing region for contacting the product.

Another advantageous apparatus embodiment may call for the pulsing valve
- being constructed and arranged within the second pipe for rotational movement therein, and/or
- including an axle or spindle spanning an internal diameter of the second pipe and rotatably mounted therein; a planar member, in particular a circular disc, mounted to the axle or spindle and having a surface area substantially similar to a cross-sectional diameter of the second pipe; and a motor or other power source operatively connected to the axle or spindle for rotation of said axle or spindle and the planar member mounted thereto.

Various valves and/or backflow preventers may expediently be used to control and restrict flow of the cryogen liquid and gas, such as:
- at least one control valve disposed within the first pipe upstream of the mixing region; and/or
- at least one back flow preventer disposed within the first pipe upstream of the mixing region, in particular upstream of the control valve, for preventing the first flow from reversing direction away from the mixing region; and/or
- at least one on/off valve disposed within the second pipe upstream of the pulsing valve; and/or
- at least one modulating valve disposed within the second pipe upstream of the pulsing valve, in particular upstream of the on/off valve.

According to a favoured embodiment of the present invention, the valve(s) may be arranged for controlling an amount of each of the first and second flows to the mixing region.

There is also provided a method embodiment of providing a flow of a liquid-gas entrained cryogen mixture onto a product, in particular onto a food product, which includes providing a first flow of liquid cryogen to the product, said providing of said first flow preferably being at about 30 psig [= thirty pounds per square inch gauge = 206.844 Kilopascal (kPa)]; providing a second flow of gaseous cryogen to contact the first flow at a mixing region of the first and second flows, said providing of said second flow preferably being at about 200 psig (= at about 1.379 MPa); and repetitively interrupting the second flow upstream of the mixing region to provide a pulsating flow of the gaseous cryogen into the liquid cryogen for providing a pulsating flow of a liquid-gas entrained cryogen mixture to the product.

According to an advantageous embodiment of the present invention, the pulsating flow may be directed to at least one spray bar for distributing said pulsating flow to the product, said distributing in particular comprising a plurality of pulsating flows from said spray bar.

In an expedient embodiment of the present invention, said spray bar may be in fluid communication with the first pipe and disposed in a space at which the product is present, said spray bar in particular comprising at least one opening through which the pulsating flow of the liquid-gas entrained cryogen mixture flows for contacting the product.

According to a favoured embodiment of the present invention, said spray bar may further comprise at least one nozzle, for example a plurality of nozzles, mounted in the at least one opening. Independently thereof or in combination therewith, said spray bar may comprise a plurality of sections in fluid communication with the first pipe, each one of the plurality of sections including a plurality of openings through which the pulsating flow of the liquid-gas entrained cryogen mixture flows to contact the product.

In a preferred embodiment of the present invention, said pulsating flow of the liquid-gas entrained cryogen mixture may be separated into a plurality of discrete flows to the product.

The liquid and gaseous cryogen may respectively be selected from nitrogen (N₂) and/or carbon dioxide (CO₂).

### Brief description of the drawings

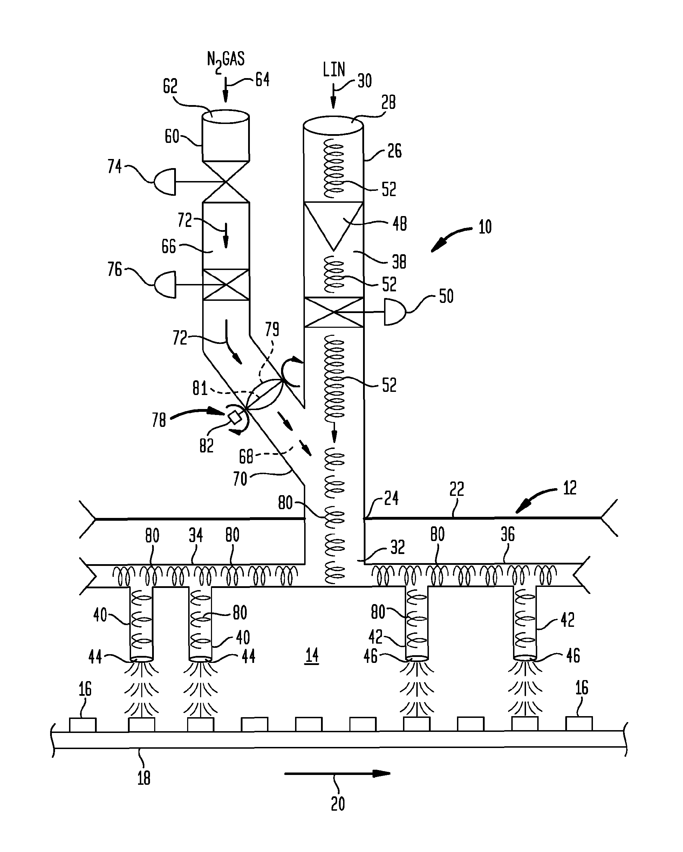

For a more complete understanding of the present embodiment disclosures and as already discussed above, there are several options to embody as well as to improve the teaching of the present invention in an advantageous manner. To this aim, reference may be made to the claims dependent on claim 1 as well as on claim 11; further improvements, features and advantages of the present invention are explained below in more detail with reference to particular and preferred embodiments by way of non-limiting example and to the appended drawing figure taken in conjunction with the following description of the embodiments and showing an embodiment of a pulsed liquid-gas entrained cryogen flow generator apparatus according to the present invention, said embodiment working according to the method of the present invention and to be used with for example food products.

### Detailed description of the drawings; best way of embodying the present invention

Before explaining the inventive embodiments in detail, it is to be understood that the present invention is not limited in its application to the details of construction and arrangement of parts illustrated in the accompanying drawings, if any, since the present invention is capable of other embodiments and being practiced or carried out in various ways. Also it is to be understood that the phraseology or terminology employed herein is for the purpose of description and not of limitation.

Referring to the Figure, an apparatus is shown generally at 10 for pulsing liquid nitrogen droplets from nozzles onto a food product or products being conveyed for providing increased heat transfer effect at the food product to chill and/or freeze same. In certain applications, carbon dioxide (CO₂) can be used instead of nitrogen (N₂). By way of example only, nitrogen (in liquid and gaseous phase) will be referred to herein when describing the present embodiments.

The present embodiments provide for the mixing of gaseous nitrogen and liquid nitrogen to produce an arrangement of pulsing spray jets of the nitrogen to provide a high heat transfer effect at food products being conveyed or transported in close proximity to the spray nozzles. The gaseous nitrogen may be provided at 200 psig (= at 1.379 MPa), while the liquid nitrogen (LIN) can be provided at 30 psig (= at 206.844 kPa).

For purposes herein, the nitrogen droplets emitted from the nozzles have a diameter of approximately 20 µm to 100 µm.

Referring to the Figure, the apparatus 10 of the present embodiments and related method embodiments can be used in conjunction with or retrofitted to a food freezing tunnel such as that shown generally at 12.

The tunnel 12 has an interior space 14 or chamber for chilling and freezing, and through which product 16, such as for example food products, are transported on a conveyor belt 18. The conveyor belt 18 transits the space 14 in a direction represented by arrow 20, by way of example only. The tunnel 12 is also provided with an inlet (not shown) and an outlet (not shown) in communication with the space 14 for introducing the food product 16 on the conveyor belt 18 through the space.

The food freezing tunnel 12 can be disposed for operation in many different types of food processing plants and facilities. The tunnel 12 includes a housing having a sidewall 22 which defines the space 14. At a region of the sidewall 22, usually at an upper area of the sidewall 22, there is provided an aperture 24 or port therein.

Referring more specifically to the apparatus 10 of the present embodiments, said apparatus includes a pipe 26 having an upper end with an opening 28 into which can be introduced by gravity or otherwise liquid nitrogen (LIN) 30. The pipe 26 extends through the aperture 24 in the sidewall 22 of the freezing tunnel 12 and terminates in another opening 32 in the space 14.

At the opening 32 of the pipe 26, said opening splits into a "T" for branches 34, 36 which are in fluid communication with an internal space 38 of the pipe 26. Each one of the branches 34, 36 has at least one corresponding nozzle 40 or nozzle 42, respectively.

The nozzles 40, 42 are also disposed in the space 14, each nozzle having a respective opening 44, 46 in close proximity to the conveyor belt 18 and food product 16 being transported thereon.

The LIN pipe 26 has disposed within the internal space 38 a back flow preventer 48 and, further downstream in the pipe 26, a control valve 50. Accordingly, the LIN 30 introduced through the opening 28 into the pipe 26 travels through the internal space 38 where its flow rate is controlled by the control valve 50, while the backflow preventer 48 prevents the LIN, regardless of pressure in the internal space or the chamber 14, from being exhausted or regurgitated upstream and back through the opening 28 and into the plant or other processing facility.

The LIN flow 30 being introduced into the pipe 26 flows continuously through the internal space 38 as indicated generally at 52, until such time as the LIN flow comes in contact with gaseous nitrogen, as will be explained below.

The apparatus 10 includes another pipe 60 having an opening 62 into which gaseous nitrogen 64 can be introduced into an internal space 66 of the pipe 60. The pipe 60 extends to have another opening 68. The pipe 60 is constructed to join in fluid communication with the internal space 38 of the pipe 26. The region where the opening 68 of the pipe 60 is in fluid communication with the internal space 38 of the pipe 26 is shown generally at 70. A flow of the gaseous nitrogen 64 is shown generally by arrows 72.

Disposed in the internal space 66 of the pipeline 60 is a modulating valve 74 and an on/off valve 76. As is shown in the Figure, the modulating valve 74 is disposed upstream of the on/off valve 76 in the internal space 66.

Downstream in the internal space 66 from the on/off valve 76 and upstream of the opening 68 there is disposed a pulsing valve 78. The pulsing valve 78 is disposed slightly upstream from the opening 68 and the region 70, just before the gaseous nitrogen 64 is introduced into the LIN flow 52 travelling through the pipe 26.

The pulsing valve 78 includes a planar member 79, such as for example a circular disc, mounted to an axle 81 or spindle which is connected to a motor 82 or other power source to rotate the axle. The disc 79 has a diameter slightly less than a diameter of the internal space 66, and a circumference slightly less than a cross-sectional circumference of the internal space 66 so that the disc 79 can freely rotate therein.

The pulsing valve 78 operates by rotating the flat circular disc 79 in the pipe 60 at a selected speed to provide the pulse rate of gas flow 72 into the LIN flow stream 52. That is, a higher rotational speed of the disc 79 will result in a higher pulse rate, while a lower rotational speed of the disc 79 will result in a lower pulse rate.

The modulating valve 74 is used to control the flow of the gaseous nitrogen 64, while the on/off valve 76 is used to shut off the flow completely or allow same to pass.

The region 70 where the pipelines 26 and 60 are in fluid communication is shown as a "Y" junction for the gaseous nitrogen to be "pulsed" into the LIN flow 52. The region 70 could alternatively be constructed as a "T" junction.

The operation of the apparatus 10 will now be described. The LIN control valve 50 is opened to permit liquid nitrogen 30 to begin flowing along the internal space 38 of the pipe 26 in a direction to the food freezing tunnel 12. The LIN flow 52 flows into the spray manifold which consists of the branches 34, 36 in fluid communication with the pipe 26 and thereafter through the nozzles 40, 42, whereupon the LIN is deposited onto the food product 16 being transported on the conveyor belt 18 through the space 14.

After the LIN flow 52 is established, a pulsed atomized flow of gaseous nitrogen is produced by actuating the pulsing valve 78, after which the modulating valve 74 and the on/off valve 76 are also opened. High pressure gaseous nitrogen 64 at a pressure higher than the LIN flow 52 travels down the pipeline 60 and into the LIN flow 52.

The pulsing valve 78 opens and closes at a fixed or variable rate. When the pulsing valve 78 is closed, a minimal gas flow into the LIN flow 52 occurs. However, when the pulsing valve 78 is opened, the gaseous nitrogen 64 flows into and contacts the LIN flow 52 at the region 70. The rate of rotation of pulsing valve 78 determines the frequency of liquid/gas pulsing 80 to be sent from the nozzle openings 44, 46 to the underlying food product 16.

The pulsing valve 78 is a butterfly valve which is constructed for this application to attain high speed, continuous rotation. An actuator or motor for the valve 78 can be speed controlled, and also stopped for the valve to be in either open or closed positions with respect to the internal space 66.

The apparatus 10 also provides for maintaining the pulsing valve 78 in an open or closed position or "unbalanced durations" in order to vary a degree of liquid or gas pulse composition to be used for the particular application. It is also possible to use the modulating valve 74 and control valve 50 to control the gas-liquid mixture ratio to occur at the region 70.

This ratio can determine the degree of atomization and the resulting nitrogen droplet size to be present in the liquid gas pulses 80 emitted from the nozzle openings 44, 46. This arrangement permits the apparatus 10 to, in effect, provide a pocket of gas followed by a pocket of liquid repetitively and continuously as necessary for the liquid-gas pulses 80 to flow from the region 70 through the nozzles 40, 42 and the nozzle openings 44, 46.

When liquid and gaseous nitrogen are used, the gaseous nitrogen 64 must always be at a higher pressure than the LIN 30 to prevent a backflow of the LIN into the internal space 66 of the pipe 60.

In those applications where carbon dioxide is used, both liquid and gaseous carbon dioxide must be maintained at a pressure exceeding 100 psig [= hundred pounds per square inch gauge = 689.48 Kilopascal (kPa)] so that the liquid CO₂ can be delivered in the apparatus 10.

However, the gaseous CO₂ delivered to the pipe 60 must always be at a pressure above a pressure of the liquid CO₂ delivered through the pipe 26 to similarly prevent a backflow of the liquid CO₂ from entering into the internal space 66 of the pipe 60.

The pipes 26, 60 can be manufactured from stainless steel, copper, aluminum or any other material suitable for being exposed to fluids at a cryogenic temperature.

The apparatus 10 and related method of the present embodiments increases overall heat transfer effect to cryogenic tunnel freezers and therefore, increases the overall efficiency of freezing applications.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference numerals

- 10: apparatus
- 12: product freezing tunnel, in particular food freezing tunnel
- 14: space or chamber, in particular interior space or chamber
- 16: product, in particular food product
- 18: conveyor belt
- 20: direction of conveyor belt 18
- 22: sidewall
- 24: aperture or port
- 26: pipe for liquid cryogen 30
- 28: opening for liquid cryogen 30
- 30: liquid cryogen, in particular liquid nitrogen (LIN) or liquid carbon dioxide
- 32: opening
- 34: first branch or first section
- 36: second branch or second section
- 38: internal space of pipe 26
- 40: nozzle of first branch or first section 34
- 42: nozzle of second branch or second section 36
- 44: opening of nozzle 40
- 46: opening of nozzle 42
- 48: back flow preventer
- 50: control valve for liquid cryogen 30
- 52: flow of liquid cryogen 30
- 60: pipe for gaseous cryogen 64
- 62: opening for gaseous cryogen 64
- 64: gaseous cryogen, in particular nitrogen (N₂) or carbon dioxide (CO₂)
- 66: internal space of pipe 60
- 68: opening of pipe 60
- 70: mixing region, in particular region where opening 68 is in fluid communication with internal space 38
- 72: flow of gaseous cryogen 64
- 74: modulating valve
- 76: on/off valve
- 78: pulsing valve
- 79: planar member, in particular circular disc
- 80: pulsating flow of liquid-gas entrained cryogen mixture, in particular pulsating flow of liquid-gas entrained cryogen mixture, for example liquid / gas pulse
- 81: axle or spindle
- 82: motor or other power source to rotate axle or spindle 81

## Claims

1. An apparatus (10) for providing a liquid-gas entrained cryogen mixture onto a product (16), in particular onto a food product, comprising:
- a first pipe (26) through which is provided a flow (52) of liquid cryogen (30);
- a second pipe (60) through which is provided a flow (72) of gaseous cryogen (64), the second pipe (60) in fluid communication with the first pipe (26) at a mixing region (70); and
a pulsing valve (78) disposed at an interior of the second pipe (60) upstream of the mixing region (70), the pulsing valve (78) adapted for releasing the gaseous cryogen (64) into the liquid cryogen (30) at select intervals of time to provide a pulsating flow (80) of the liquid-gas entrained cryogen mixture downstream of the mixing region (70) for contacting the product (16).

2. The apparatus according to claim 1, wherein the pulsing valve (78) is constructed and arranged within the second pipe (60) for rotational movement therein.

3. The apparatus according to claim 1 or 2, wherein the pulsing valve (78) comprises:
- an axle or spindle (81) spanning an internal diameter of the second pipe (60) and rotatably mounted therein;
- a planar member (79) mounted to the axle or spindle (81) and having a surface area substantially similar to a cross-sectional diameter of the second pipe (60), said planar member (79) in particular comprising a circular disc; and
- a motor or other power source (82) operatively connected to the axle or spindle (81) for rotation of said axle or spindle (81) and the planar member (79) mounted thereto.

4. The apparatus according to at least one of claims 1 to 3, further comprising an on/off valve (76) disposed within the second pipe (60) upstream of the pulsing valve (78).

5. The apparatus according to at least one of claims 1 to 4, further comprising a modulating valve (74) disposed within the second pipe (60) upstream of the pulsing valve (78), in particular upstream of the on/off valve (76).

6. The apparatus according to at least one of claims 1 to 5, further comprising a control valve (50) disposed within the first pipe (26) upstream of the mixing region (70).

7. The apparatus according to at least one of claims 1 to 6, further comprising a back flow preventer (48) disposed within the first pipe (26) upstream of the mixing region (70), and in particular upstream of the control valve (50).

8. The apparatus according to at least one of claims 1 to 7, further comprising a spray bar in fluid communication with the first pipe (26) and disposed in a space (14) at which the product (16) is present, said spray bar in particular comprising at least one opening (44, 46) through which the pulsating flow (80) of the liquid-gas entrained cryogen mixture flows for contacting the product (16).

9. The apparatus according to claim 8, wherein the spray bar further comprises
- a nozzle (40, 42) mounted in the at least one opening (44, 46), and/or
- a plurality of sections (34, 36) in fluid communication with the first pipe (26), each one of the plurality of sections (34, 36) including a plurality of openings through which the pulsating flow (80) of the liquid-gas entrained cryogen mixture flows to contact the product (16).

10. The apparatus according to at least one of claims 1 to 9, wherein
- the liquid cryogen (30) comprises a liquid selected from the group consisting of liquid nitrogen (LIN) and liquid carbon dioxide, and/or
- the gaseous cryogen (64) comprises a gas selected from the group consisting of nitrogen (N₂) and carbon dioxide (CO₂).

11. A method of providing a flow (80) of a liquid-gas entrained cryogen mixture onto a product (16), in particular onto a food product, comprising:
- providing a first flow (26) of a liquid cryogen (30) to the product (16);
- providing a second flow (60) of a gaseous cryogen (64) for contacting the first flow (26) at a mixing region (70) of the first flow (26) and second flow (60); and
- repetitively interrupting the second flow (60) upstream of the mixing region (70) to provide a pulsating flow of the gaseous cryogen (64) into the liquid cryogen (30) for providing a pulsating flow (80) of a liquid-gas entrained cryogen mixture to the product (16).

12. The method according to claim 11, further comprising directing the pulsating flow (80) to a spray bar for distributing said pulsating flow (80) to the product (16), said distributing in particular comprising a plurality of pulsating flows (80) from the spray bar.

13. The method according to claim 11 or 12, further comprising
- preventing the first flow (26) from reversing direction away from the mixing region (70), and/or
- controlling an amount of each of the first flow (26) and second flow (60) to the mixing region (70), and/or
- separating the pulsating flow (80) of the liquid-gas entrained cryogen mixture into a plurality of discrete flows to the product (16).

14. The method according to at least one of claims 11 to 13, wherein
- the providing the first flow (26) is at about 30 psig (= 206.844 kPa), and/or
- the providing the second flow (60) is at about 200 psig (= 1.379 MPa).

15. The method according to at least one of claims 11 to 14, wherein
- the liquid cryogen (30) comprises a liquid selected from the group consisting of liquid nitrogen (LIN) and liquid carbon dioxide, and/or
- the gaseous cryogen (64) comprises a gas selected from the group consisting of nitrogen (N₂) and carbon dioxide (CO₂).
